(19) **Europäisches Patentamt / European Patent Office / Office européen des brevets**

(11) **EP 4 130 800 A1**

(12) **EUROPEAN PATENT APPLICATION**
published in accordance with Art. 153(4) EPC

(43) Date of publication:
**08.02.2023 Bulletin 2023/06**

(21) Application number: **21837352.0**

(22) Date of filing: **16.06.2021**

(51) International Patent Classification (IPC):
**G01S 19/48** (2010.01)   **G01S 17/06** (1980.01)
**G01S 17/86** (2020.01)

(86) International application number:
**PCT/CN2021/100288**

(87) International publication number:
**WO 2022/007602 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2020 CN 202010657188**

(71) Applicant: **Beijing Jingdong Qianshi Technology
Co., Ltd.
Beijing 100176 (CN)**

(72) Inventors:
• **KONG, Qi
Beijing 100176 (CN)**
• **ZHANG, Jinfeng
Beijing 100176 (CN)**

(74) Representative: **Ruuskanen, Juha-Pekka
Page White & Farrer Limited
Bedford House
21A John Street
London WC1N 2BF (GB)**

Remarks:
A request for correction of figures 2 and 4 has been filed pursuant to Rule 139 EPC. A decision on the request will be taken during the proceedings before the examining division (Guidelines for Examination in the EPO, A-V, 3).

(54) **METHOD AND APPARATUS FOR DETERMINING LOCATION OF VEHICLE**

(57)   A method and apparatus for determining a location of a vehicle, relating to the technical field of autonomous driving. The method comprises: determining the current location point of a vehicle according to a positioning state of a GPS of the vehicle (101); obtaining laser point cloud data measured by the vehicle at the current location point and using same as first point cloud data (102); obtaining point cloud data, in a point cloud map, corresponding to a preset starting point of the vehicle, and using same as second point cloud data (103); matching the first point cloud data with the second point cloud data to determine a transformation matrix between the first point cloud data and the second point cloud data (104); and determining coordinate information of the current location point according to coordinate information of the preset starting point and the transformation matrix (105). The method and apparatus enable a vehicle to quickly and accurately obtain an accurate current location in different complex environments, without relying on a GPS device, thus avoiding the problem that a location of a vehicle cannot be determined when a GPS signal is poor or even there is no GPS signal and improving the accuracy of determining a location of a vehicle.

Fig.1

**Description**

**CROSS-REFERENCE TO RELATED APPLICATIONS**

The present disclosure is based on and claims priority of Chinese application for invention No. 202010657188.2, filed on Jul. 09, 2020, the disclosure of which is hereby incorporated into this disclosure by reference in its entirety.

**TECHNICAL FIELD**

The present disclosure relates to the technical field of automatic driving, and in particular relates to a method and apparatus for determining a location of a vehicle.

**BACKGROUND**

In the field of autonomous driving, determining the real-time location of a vehicle is a very important step. For scenarios where a vehicle may depart from any locations, how to determine the real-time location of the vehicle is an urgent problem to be solved.
In some related technologies, vehicles are generally equipped with GPS (Global Positioning System) or GPS/INS (Inertial Navigation System) combined devices to determine their locations.

**SUMMARY**

According to some embodiments of the present disclosure, there is provided a method for determining a location of a vehicle, comprising:

    determining a current location point of the vehicle according to a positioning state of a GPS of the vehicle;
    obtaining laser point cloud data measured by the vehicle at the current location point as first point cloud data;
    obtaining point cloud data corresponding to a preset starting point of the vehicle in a point cloud map as second point cloud data;
    matching the first point cloud data with the second point cloud data to determine a transformation matrix between the first point cloud data and the second point cloud data;
    determining coordinate information of the current location point according to coordinate information of the preset starting point and the transformation matrix.

In some embodiments, determining a current location point of the vehicle comprises: using a first location point currently measured by GPS as the current location point in the case that the positioning state of the GPS of the vehicle is better than a preset condition.
In some embodiments, determining a current location point of the vehicle comprises:

    calculating a predicted value of a location point at the current time according to information of location point at a previous time measured by a sensor in the case that the positioning state of the GPS of the vehicle is not better than the preset condition;
    obtaining a measured value of the location point at the current time; and
    correcting the predicted value using the measured value of the location point at the current time to determine a second location point and using the second location point as the current location point of the vehicle.

In some embodiments, obtaining a measured value of the location point at the current time comprises:

    using information of a location point of laser point cloud data measured by a lidar at the current time in the point cloud map as the measured value of the location point at the current time;
    or using information of a location point measured by the GPS at the current time as the measured value of the location point at the current time.

In some embodiments, determining a current location point of the vehicle comprises: using a third location point manually set in the point cloud map as the current location point of the vehicle in the case that the positioning state of the GPS of the vehicle is not better than the preset condition.
In some embodiments, matching the first point cloud data with the second point cloud data to determine a transformation matrix between the first point cloud data and the second point cloud data comprises:

dividing the second point cloud data into ground second point cloud data and non-ground second point cloud data, and dividing the first point cloud data into ground first point cloud data and non-ground first point cloud data;

determining a first transformation matrix according to the ground second point cloud data and the ground first point cloud data;

determining a second transformation matrix according to the first transformation matrix, the non-ground second point cloud data and the non-ground first point cloud data.

In some embodiments, determining a first transformation matrix according to the ground second point cloud data and the ground first point cloud data comprises:

performing down-sampling processing on the ground first point cloud data;

matching the ground second point cloud data with the down-sampled ground first point cloud data to obtain a rotation-translation matrix for transforming the ground second point cloud data to the down-sampled ground first point cloud data, as the first transformation matrix.

In some embodiments, determining a second transformation matrix according to the first transformation matrix, the non-ground second point cloud data and the non-ground first point cloud data comprises:

transforming the non-ground second point cloud data according to the first transformation matrix to obtain transformed non-ground second point cloud data;

performing down-sampling processing on the non-ground first point cloud data;

matching the transformed non-ground second point cloud data with the down-sampled non-ground first point cloud data to obtain a rotation-translation matrix for transforming the transformed non-ground second point cloud data to the down-sampled non-ground first point cloud data, as the second transformation matrix.

In some embodiments, determining coordinate information of the current location point according to coordinate information of the preset starting point and the transformation matrix comprises:

transforming the coordinate information of the preset starting point according to the first transformation matrix to obtain first coordinate information, and using a z-axis coordinate value in the first coordinate information as a z-axis coordinate value of the current location point; and

transforming the first coordinate information according to the second transformation matrix to obtain second coordinate information, and using an x-axis coordinate value and a y-axis coordinate value in the second coordinate information as an x-axis coordinate value and a y-axis coordinate value of the current location point.

In some embodiments, the method further comprises:

transforming orientation information corresponding to the preset starting point according to the first transformation matrix to obtain first orientation information, and using a roll angle value and a pitch angle value in the first orientation information as a current roll angle value and a current pitch angle value of the vehicle;

transforming the first orientation information according to the second transformation matrix to obtain second orientation information and using a heading angle value in the second orientation information as a current heading angle value of the vehicle.

According to other embodiments of the present disclosure, there is provided an apparatus for determining a location of a vehicle, comprising:

a current location determination module configured for determining a current location point of the vehicle according to a positioning state of a GPS of the vehicle;

a first point cloud data determination module configured for obtaining laser point cloud data measured by the vehicle at the current location point as first point cloud data;

a second point cloud data determination module configured for obtaining point cloud data corresponding to a preset starting point of the vehicle in a point cloud map as second point cloud data;

a transformation matrix determination module configured for matching the first point cloud data with the second point cloud data to determine a transformation matrix between the first point cloud data and the second point cloud data;

a coordinate determination module configured for determining coordinate information of the current location point according to coordinate information of the preset starting point and the transformation matrix.

According to still other embodiments of the present disclosure, there is provided an apparatus for determining a location of a vehicle, comprising: a memory; a processor coupled to the memory, which is configured to perform the method for determining a location of a vehicle according to any one of the previous embodiments based on instructions stored in the memory.

According to still further embodiments of the present disclosure, there is provided a non-transitory computer-readable storage medium stored a computer program, which when executed by a processor implements the method for determining a location of a vehicle according to any one of the above embodiments.

## BRIEF DESCRIPTION OF THE DRAWINGS

The drawings needed to be used in the description of the embodiments or related art will be briefly introduced below. The present disclosure can be more clearly understood from the following detailed description with reference to the accompanying drawings.

It is obvious that, the drawings illustrated as follows are merely some of the embodiments of the present disclosure. For a person skilled in the art, he or she may also acquire other drawings according to such drawings on the premise that no inventive effort is involved.

FIG. 1 shows a schematic flowchart of a method for determining a location of a vehicle according to some embodiments of the present disclosure.

FIG. 2 shows a schematic flowchart of a method for determining a current location point according to some embodiments of the present disclosure.

FIG. 3 shows a schematic flowchart of an apparatus for determining a location of a vehicle according to some embodiments of the present disclosure.

FIG. 4 shows a schematic flowchart of an apparatus for determining a location of a vehicle according to other embodiments of the present disclosure.

## DETAILED DESCRIPTION

The inventors found that, in the related art, the accuracy of the determined real-time location of a vehicle depends heavily on the quality of the GPS signal. In a scene of departing from any location, for example, when the vehicle is located between two high-rise buildings or in a tunnel where the GPS signal is poor or even with no GPS signal, there will be a large error in a location determined according to the GPS signal or it is impossible to obtain location information, and thus the vehicle cannot be driven normally, or safety problems may be even arise in subsequent automatic driving of the vehicle.

In view of this, the present disclosure provides a method capable of improving the accuracy of a determined vehicle location.

In an embodiment of the present disclosure, a current location point of a vehicle is determined according to a positioning state of a GPS of the vehicle; laser point cloud data measured by the vehicle at the current location point is obtained as first point cloud data; point cloud data corresponding to a preset starting point of the vehicle in a point cloud map is obtained as second point cloud data; the first point cloud data is matched with the second point cloud data to determine a transformation matrix between the first point cloud data and the second point cloud data; coordinate information of the current location point is determined according to coordinate information of the preset starting point and the transformation matrix. For a vehicle at any location, the transformation matrix is determined through point cloud alignment, and then the coordinate information of the current location point is determined, so that the vehicle can quickly obtain an accurate current location in various complex environments without relying on GPS equipment. Thereby, the problem that the location of the vehicle cannot be determined due to poor GPS signal or even no GPS signal can be avoided, and the accuracy of the determined location of the vehicle can be improved. Below, a clear and complete description will be given for the technical solution of embodiments of the present disclosure with reference to the drawings of the embodiments.

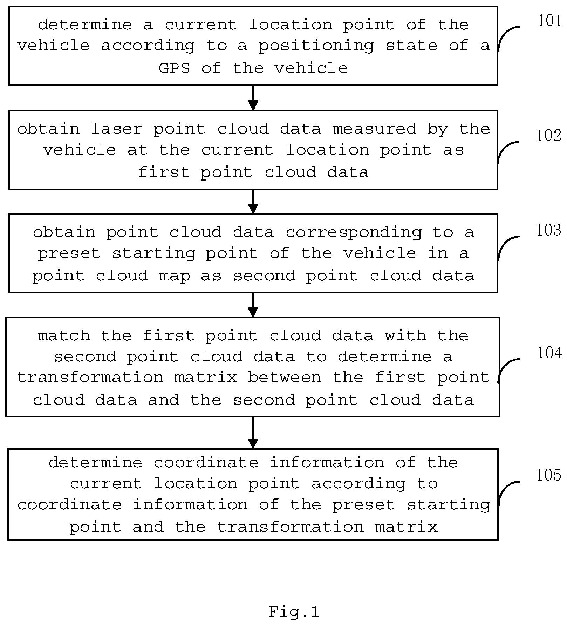

FIG. 1 shows a schematic flowchart of a method for determining a location of a vehicle according to some embodiments of the present disclosure. This method can be performed, for example, by an apparatus for determining a location of a vehicle.

As shown in FIG. 1, the method of this embodiment comprises steps 101 to 105.

In step 101, a current location point of a vehicle is determined according to a positioning state of a GPS of the vehicle.

In some embodiments, in the case that the positioning state of the GPS of the vehicle is better than a preset condition, a first location point currently measured by GPS is determined as the current location point. Wherein, the positioning state of the GPS can be determined by, for example, positioning accuracy indicated by the GPS board. In the case that the positioning accuracy indicated by the GPS board is greater than a preset accuracy threshold, it is determined that the positioning state of the GPS is better than the preset condition.

In some embodiments, in the case that the positioning state of the GPS of the vehicle is not better than the preset condition, a predicted value of a location point at the current time is calculated according to information of location point at a previous time measured by a sensor; a measured value of the location point at the current time is obtained; the predicted value is corrected using the measured value of the location point at the current time to determine a second location point, which is used as the current location point of the vehicle.

Wherein, the sensor comprises an IMU (Inertial Measurement Unit) and a wheel speedometer. At a previous time of the current time, first of all, the wheel speedometer and an accelerometer in the IMU measure a speed and an acceleration of each axis of the vehicle and a rotational speed and a rotational acceleration of each axis of the vehicle, and a motion trajectory and orientation angles of the vehicle are obtained through measuring the accelerations and rotational angles by a gyroscope, an accelerometer, and an algorithm processing unit in the IMU. Then, the IMU calculates location information and orientation information of a location point at the current time based on location information of the origin and accumulative information of location point of the vehicle at a previous time. For example, location-orientation information of the location point at the current time can be obtained through calculation using the Dead Reckoning algorithm. The accumulative information of location point of the vehicle at a previous point of time comprises, for example, accumulative variations in the speed and its acceleration of each axis of the vehicle, accumulative variations in the rotational speed and its acceleration of each axis of the vehicle, and variations in orientation angles of each axis of the vehicle, and the like.

Obtaining a measured value of the location point at the current time comprises: using information of a location point of laser point cloud data measured by a lidar at the current time in the point cloud map as the measured value of the location point at the current time; or using information of a location point measured by the GPS at the current time as the measured value of the location point at the current time. Finally, the predicted value is corrected using the measured value of the location point at the current time (for example, using the Extended Kalman Filter (EKF) algorithm for correction) to determine a second location point, which is used as the current location point of the vehicle.

In some embodiments, in the case that the positioning state of the GPS of the vehicle is not better than the preset condition, a third location point manually set in the point cloud map is used as the current location point of the vehicle. Through determining the current location point of the vehicle by manually setting the location point, preparations can be made for subsequent point cloud alignment and location determination quickly.

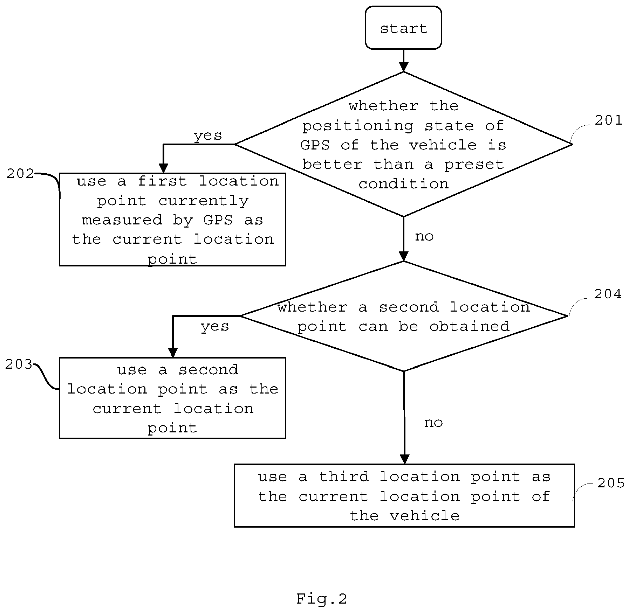

As shown in FIG. 2, FIG. 2 shows a schematic flowchart of a method for determining a current location point according to some embodiments of the present disclosure.

First of all, in step 201, it is determined whether the positioning state of the GPS is better than a preset condition.

In the case that the positioning state of the GPS of the vehicle is better than the preset condition, in step 202, a first location point currently measured by GPS is used as the current location point.

In the case that the positioning state of the GPS of the vehicle is not better than the preset condition, in step 203, it is determined whether a second location point can be obtained. When the vehicle is in a normal driving state, for example, the real-time position and orientation data of the vehicle can be written to the location recording file at a frequency of 10 Hz, and the current position and orientation data overwrites the previous frame of position and orientation data. Wherein the frequency of writing real-time position and orientation data of the vehicle to the location recording file can be set according to the speed of the vehicle. For example, the frequency can be set to ensure that the displacement of the vehicle within the time interval between two samplings (that is, two write operations to the location recording file) is not greater than an error requirement of the vehicle's positioning initialization module for the input current location. Therefore, a location before power failure of the vehicle can be obtained by reading the location recording file, which is then can be used to determine the current location point.

In some embodiments, the method for calculating the second location point written in the location recording file may include, for example: calculating a predicted value of a location point at the current time according to information of location point at a previous time measured by a sensor; obtaining a measured value of the location point at the current time; correcting the predicted value using the measured value of the location point at the current time to determine a second location point and using the second location point as the current location point of the vehicle.

In the case that the second location point is obtained, then, in step 204, the second location point is used as the current location point of the vehicle.

In the case that the location recording file is damaged, or the initial location recording file is invalid due to first power-on of the vehicle, information of the second location point stored in the location recording file cannot be obtained.

In the case that the second location point is not obtained, in step 205, a third location point manually set in the point cloud map is used as the current location point of the vehicle.

The above embodiment can provide a variety of methods to determine an approximate current location point according to different positioning states of the GPS when the vehicle's GPS signal is poor or there is no GPS signal, so that the current location point of the vehicle can be determined without relying on the GPS signal, which lays the foundation for the subsequent accurate location determination of the vehicle.

In step 102, laser point cloud data measured by the vehicle at the current location point is obtained as first point cloud data.

After obtaining location information of the current location point of the vehicle, for example, laser point cloud data measured by scanning the surrounding environment with a lidar can be used as the first point cloud data. In the case that the coordinate system (for example a lidar coordinate system) of the laser point cloud data measured by the vehicle at the current location point is different from the coordinate system of the point cloud map, the laser point cloud data can be converted from the lidar coordinate system to the point cloud map coordinate system as the first point cloud data.

In step 103, point cloud data corresponding to a preset starting point of the vehicle in a point cloud map is obtained as the second point cloud data.

A high-precision point cloud map is obtained according to location information of the preset starting point, and point cloud data corresponding to the preset starting point in the point cloud map is obtained as the second point cloud data. In the case that the coordinate system of the location information of the preset starting point is different from the coordinate system of the point cloud map, the location information of the preset starting point may be converted to the coordinate system of the point cloud map first.

For example, the location information of the preset starting point can be measured in advance, and only needs to be measured once and can be used permanently. The location information of the preset starting point is represented in different ways according to the coordinate system used by the vehicle. For example, in the case that the vehicle uses the WGS84 (World Geodetic System 1984) coordinate system, the location information of the preset starting point can be represented in the form of latitude and longitude. In the case that the vehicle uses a SLAM (Simultaneous Localization And Mapping) map, the location information of the preset starting point can be represented by a relative location of the vehicle with respect to the origin of the map.

In step 104, the first point cloud data is matched with the second point cloud data to determine a transformation matrix between the first point cloud data and the second point cloud data.

A point cloud alignment algorithm may be used to match the first point cloud data with the second point cloud data. The point cloud alignment algorithm may include, for example, the ICP (Iterative Closest Point) algorithm, the GICP (Generalized Iterative Closest Point) algorithm. Iterative) algorithm, the NDT (Normal Distribution Transform) algorithm, or positioning algorithms based on Multiresolution Gaussian Mixture Maps, which is not limited to the examples given herein. After matching the first point cloud data with the second point cloud data, a transformation matrix for transforming the second point cloud data to the first point cloud data can be obtained. The transformation matrix may be a $4\times4$ rotation-translation matrix, and the error between the second point cloud data transformed by rotation and translation according to the transformation matrix and the first point cloud data satisfies a preset condition.

In some embodiments, the second point cloud data is divided into ground second point cloud data and non-ground second point cloud data, and the first point cloud data is divided into ground first point cloud data and non-ground first point cloud data; a first transformation matrix is determined according to the ground second point cloud data and the ground first point cloud data; a second transformation matrix is determined according to the first transformation matrix, the non-ground second point cloud data and the non-ground first point cloud data.

Wherein, the determining the first transformation matrix comprises: first, performing down-sampling processing on the ground first point cloud data; matching the ground second point cloud data and the down-sampled ground first point cloud data to obtain a rotation-translation matrix for transforming the ground second point cloud data to the down-sampled ground first point cloud data, as the first transformation matrix. Through the down-sampling processing, the amount of data to be processed can be reduced and the matching efficiency can be improved. The down-sampled ground first point cloud data can match the ground second point cloud data in terms of density or the distance between the points, and the like. The ICP algorithm may be used to match the ground second point cloud data with the down-sampled ground first point cloud data to obtain the first transformation matrix $M_1$.

Wherein, the determining the second transformation matrix comprises: first, transforming the non-ground second point cloud data according to the first transformation matrix to obtain transformed non-ground second point cloud data; performing down-sampling processing on the non-ground first point cloud data; matching the transformed non-ground second point cloud data and the down-sampled non-ground first point cloud data to obtain a rotation-translation matrix for transforming the transformed non-ground second point cloud data to the down-sampled non-ground first point cloud data, as the second transformation matrix. After the non-ground second point cloud data is transformed using the first transformation matrix, it is closer to the non-ground first point cloud data. The transformed non-ground second point cloud data is further matched with the down-sampled non-ground first point cloud data, and the accuracy is higher. Through the down-sampling processing, the amount of data to be processed can be reduced and the matching efficiency can be improved. Algorithms such as the positioning algorithm based on Multiresolution Gaussian Mixture Maps may be used to match the transformed non-ground second point cloud data with the down-sampled non-ground first point cloud data to obtain the second transformation matrix $M_2$.

In step 105, coordinate information of the current location point is determined according to coordinate information of the preset starting point and the transformation matrix.

The coordinate information of the preset starting point is transformed according to the first transformation matrix to obtain first coordinate information, and a z-axis coordinate value in the first coordinate information is used as a z-axis coordinate value of the current location point; the first coordinate information is transformed according to the second transformation matrix to obtain second coordinate information, and an x-axis coordinate value and a y-axis coordinate value in the second coordinate information are used as an x-axis coordinate value and a y-axis coordinate value of the current location point.

For example, in the case that the coordinate information of the preset starting point is expressed as $(x, y, z)$,

and the transformation matrix is expressed as $\begin{bmatrix} M_{11} & M_{12} & M_{13} & M_{14} \\ M_{21} & M_{22} & M_{23} & M_{24} \\ M_{31} & M_{32} & M_{33} & M_{34} \\ M_{41} & M_{42} & M_{43} & M_{44} \end{bmatrix}$, the coordinate information of the current location point $(x', y', z')$ can be determined according to:

$$[x', y', z', 1] = [x, y, z, 1] \begin{bmatrix} M_{11} & M_{12} & M_{13} & M_{14} \\ M_{21} & M_{22} & M_{23} & M_{24} \\ M_{31} & M_{32} & M_{33} & M_{34} \\ M_{41} & M_{42} & M_{43} & M_{44} \end{bmatrix}$$

Wherein, the coordinate values $(x, y, z)$ and $(x', y', z')$ of the x, y, z axes in the map coordinate system can represent longitude, latitude and altitude respectively, for example.

In some embodiments, the method further comprises determining orientation information of the current location point of the vehicle. For example, first orientation information corresponding to the preset starting point is transformed according to the first transformation matrix to obtain first orientation information, a roll angle value and a pitch angle value in the first orientation information are used as a current roll angle value and a current pitch angle value of the vehicle; then the first orientation information is transformed according to the second transformation matrix to obtain second orientation information, a heading angle value in the second orientation information is used as a current heading angle value of the vehicle.

Wherein, according to the matching of the ground second point cloud data and the ground first point cloud data, variations in height, roll angle and pitch angle can be determined more accurately. Therefore, the z-axis coordinate value of the current location point and the current roll angle value and pitch angle value of the vehicle can be determined more accurately using the first transformation matrix $M_1$.

The preset orientation information corresponding to the preset starting point may be orientation information when point cloud data corresponding to the preset starting point in the point cloud map is generated. The preset orientation information comprises a preset roll angle value, a preset pitch angle value, and a preset heading angle value, all of which can be 0 by default in general. Assuming that the coordinate information of the preset starting point is represented as $P_0 = (x, y, z)$, an orientation matrix R (which is a $3 \times 3$ matrix) is obtained according to the preset orientation information corresponding to the preset starting point. Then, a location-orientation matrix $\begin{bmatrix} R & P_0^{\mathbf{T}} \\ 0_{1\times 3} & 1 \end{bmatrix}$ of the preset starting point can be obtained, which is a $4 \times 4$ matrix and can be multiplied with the first transformation matrix $M_1$ to obtain the first location-orientation matrix of the current location point. According to the first location-orientation matrix, the first coordinate information and the first orientation information can be obtained, so as to obtain the z-axis coordinate value of the current location point, and the current roll angle value and pitch angle value of the vehicle.

The first orientation information is transformed according to the second transformation matrix to obtain second orientation information, wherein a heading angle value in the second orientation information is used as a current heading angle value of the vehicle. For example, the first location-orientation matrix can be multiplied with the second transformation matrix $M_2$ to obtain a second location-orientation matrix. Second coordinate information and second orientation information can be obtained according to the second location-orientation matrix, so as to obtain the x-axis coordinate value and the y-axis coordinate value of the current location point, and the current heading angle value of the vehicle. According to the matching of the non-ground second point cloud data and the non-ground first point cloud data, variations in longitude, latitude and heading angle can be determined more accurately. Therefore, according to the second transformation matrix $M_2$, the x-axis coordinate value, the y-axis coordinate value of the current location point, and the current heading angle value of the vehicle can be determined more accurately.

In the above embodiment, for a vehicle at any location, the transformation matrix is determined through point cloud alignment, and then the coordinate information of the current location point is determined, so that the vehicle can quickly obtain an accurate current location in various complex environments without relying on GPS equipment. Thereby, the problem that the location of the vehicle cannot be determined due to poor GPS signal or even no GPS signal can be avoided, and the accuracy of the determined location of the vehicle can be improved. In addition, through the matching of the ground first point cloud data and the ground second point cloud data, variations in the height, pitch angle and roll angle of the current location point with respect to the preset starting point can be determined more accurately. Through matching the non-ground first point cloud data and the non-ground second point cloud data, variations in the latitude, longitude and heading of current location point with respect to the preset starting point can be determined more accurately. Therefore, the method according to the above embodiment can more accurately determine the coordinate information and orientation information of the vehicle at the current location point.

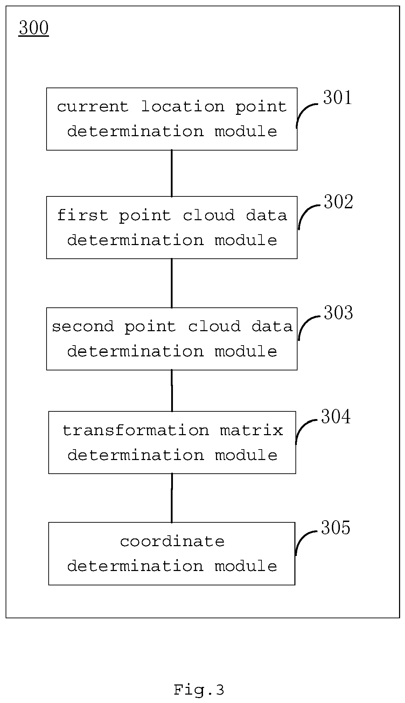

FIG. 3 shows a schematic flowchart of an apparatus for determining a location of a vehicle according to some embodiments of the present disclosure.

As shown in FIG. 3, the apparatus 300 for determining a vehicle location of this embodiment comprises: a current location point determination module 301, a first point cloud data determination module 302, a second point cloud data determination module 303, a transformation matrix determination module 304, and a coordinate determination module 305.

The current location determination module 301 is configured for determining a current location point of the vehicle according to a positioning state of a GPS of the vehicle.

In some embodiments, the current location determination module 301 is configured for using a first location point currently measured by GPS as the current location point in the case that the positioning state of the GPS of the vehicle is better than a preset condition.

In other embodiments, the current location determination module 301 is configured for calculating a predicted value of a location point at the current time according to information of location point at a previous time measured by a sensor in the case that the positioning state of the GPS of the vehicle is not better than the preset condition; obtaining a measured value of the location point at the current time; and correcting the predicted value using the measured value of the location point at the current time to determine a second location point and using the second location point as the current location point of the vehicle. Wherein, obtaining a measured value of the location point at the current time comprises: using information of a location point of laser point cloud data measured by a lidar at the current time in the point cloud map as the measured value of the location point at the current time; or using information of a location point measured by the GPS at the current time as the measured value of the location point at the current time.

In still other embodiments, the current location determination module 301 is configured for using a third location point manually set in the point cloud map as the current location point of the vehicle in the case that the positioning state of the GPS of the vehicle is not better than the preset condition.

The above embodiment can provide a variety of methods to determine a current location point according to different positioning states of GPS when the vehicle's GPS signal is poor or there is no GPS signal, so that the current location point of the vehicle can be determined without relying on the GPS signal, which lays the foundation for the subsequent accurate location determination of the vehicle.

The first point cloud data determination module 302 is configured for obtaining laser point cloud data measured by the vehicle at the current location point as first point cloud data.

The second point cloud data determination module 303 is configured for obtaining point cloud data corresponding to a preset starting point of the vehicle in a point cloud map as second point cloud data.

The transformation matrix determination module 304 is configured for matching the first point cloud data with the second point cloud data to determine a transformation matrix between the first point cloud data and the second point cloud data.

In some embodiments, the transformation matrix determination module 304 is configured for dividing the second point cloud data into ground second point cloud data and non-ground second point cloud data, and dividing the first point cloud data into ground first point cloud data and non-ground first point cloud data; determining a first transformation matrix according to the ground second point cloud data and the ground first point cloud data; determining a second transformation matrix according to the first transformation matrix, the non-ground second point cloud data and the non-ground first point cloud data. Wherein, determining the first transformation matrix comprises: performing down-sampling processing on the ground first point cloud data; matching the ground second point cloud data with the down-sampled ground first point cloud data to obtain a rotation-translation matrix for transforming the ground second point cloud data to the down-sampled ground first point cloud data, as the first transformation matrix. Wherein, determining the second transformation matrix comprises: transforming the non-ground second point cloud data according to the first transformation matrix to obtain transformed non-ground second point cloud data; performing down-sampling processing on the non-ground first point cloud data; matching the transformed non-ground second point cloud data with the down-sampled non-ground first point cloud data to obtain a rotation-translation matrix for transforming the transformed non-ground second point cloud data to the down-sampled non-ground first point cloud data, as the second transformation matrix.

The coordinate determination module 305 is configured for determining coordinate information of the current location point according to coordinate information of the preset starting point and the transformation matrix.

The coordinate determination module 305 is configured for transforming the coordinate information of the preset starting point according to the first transformation matrix to obtain first coordinate information, and using a z-axis coordinate value in the first coordinate information as a z-axis coordinate value of the current location point; transforming the first coordinate information according to the second transformation matrix to obtain second coordinate information, and using an x-axis coordinate value and a y-axis coordinate value in the second coordinate information as an x-axis coordinate value and a y-axis coordinate value of the current location point.

In some embodiments, the coordinate determination module 305 is further configured for determining orientation information of the current location point of the vehicle. For example, orientation information corresponding to the preset starting point is first transformed according to the first transformation matrix to obtain first orientation information, wherein a roll angle value and a pitch angle value in the first orientation information are used as a current roll angle value and a current pitch angle value of the vehicle; then the first orientation information is transformed according to the second transformation matrix to obtain second orientation information, wherein a heading angle value in the second orientation information is used as a current heading angle value of the vehicle.

In the above embodiment, the vehicle can quickly obtain an accurate current location in various complex environments without relying on GPS. Thereby, the problem that the location of the vehicle cannot be determined due to poor GPS signal or even no GPS signal can be avoided, and the accuracy of the determined location of the vehicle can be improved. In addition, through distinguishing between ground points and non-ground points and matching them respectively, variations in the altitude, pitch angle and roll angle of the current location point with respect to the preset starting point, as well as variations in the latitude, longitude and heading of the current location point with respect to the preset starting point can be determined more accurately. Thus, the effect of accurately determining coordinate information and orientation information of the vehicle at the current location point is achieved.

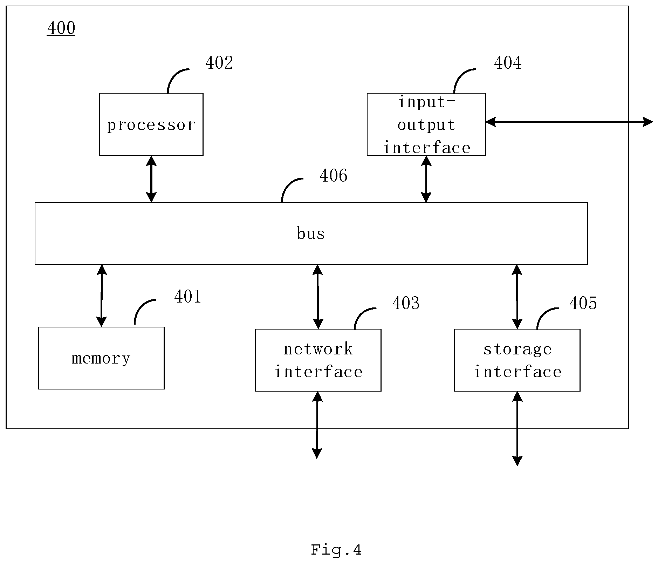

FIG. 4 shows a schematic flowchart of an apparatus for determining a location of a vehicle according to other embodiments of the present disclosure.

As shown in FIG. 4, the apparatus 400 for determining a vehicle location of this embodiment comprises: memory 401 and a processor 402 coupled to the memory 401, the processor 402 configured to perform the method for determining a location of a vehicle according to any one of the embodiments of the present disclosure based on instructions stored in the memory 401.

For example, first of all, a current location point of a vehicle is determined according to a positioning state of a GPS of a vehicle; laser point cloud data measured by the vehicle at the current location point is obtained as first point cloud data; point cloud data corresponding to a preset starting point of the vehicle in a point cloud map is obtained as second point cloud data; then, the first point cloud data is then matched with the second point cloud data to determine a transformation matrix between the first point cloud data and the second point cloud data; finally, coordinate information of the current location point is determined according to coordinate information of the preset starting point and the transformation matrix.

Wherein, the memory 401 may include, for example, system memory, a fixed non-volatile storage medium, or the like. The system memory stores, for example, an operating system, application programs, a boot loader (Boot Loader), and other programs.

The apparatus 400 for determining a vehicle location may further include an input-output interface 403, a network interface 404, a storage interface 405, and the like. These interfaces 403, 404, 405 and the memory 401 and the processor 402 may be connected through a bus 406, for example. Wherein, the input-output interface 403 provides a connection interface for input-output devices such as a display, a mouse, a keyboard, and a touch screen. The network interface 404 provides a connection interface for various networked devices. The storage interface 405 provides a connection interface for external storage devices such as an SD card and a USB flash disk.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software elements. Moreover, the present disclosure can be in a form of one or more computer program products containing computer-executable codes which can be implemented in the computer-executable storage medium (including but not limited to disks, CD-ROM, optical disks, etc.).

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general-purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The above is merely preferred embodiments of this disclosure and is not limitation to this disclosure. Within spirit and principles of this disclosure, any modification, replacement, improvement and etc. shall be contained in the protection scope of this disclosure.

**Claims**

1. A method for determining a location of a vehicle, **characterized by** comprising:

   determining a current location point of the vehicle according to a positioning state of a GPS of the vehicle;
   obtaining laser point cloud data measured by the vehicle at the current location point as first point cloud data;
   obtaining point cloud data corresponding to a preset starting point of the vehicle in a point cloud map as second point cloud data;
   matching the first point cloud data with the second point cloud data to determine a transformation matrix between the first point cloud data and the second point cloud data; and
   determining coordinate information of the current location point according to coordinate information of the preset starting point and the transformation matrix.

2. The method for determining a location of a vehicle according to claim 1, **characterized in that** determining a current location point of the vehicle comprises:
   using a first location point currently measured by GPS as the current location point in the case that the positioning state of the GPS of the vehicle is better than a preset condition.

3. The method for determining a location of a vehicle according to claim 1, **characterized in that** determining a current location point of the vehicle comprises:

   calculating a predicted value of a location point at the current time according to information of location point at a previous time measured by a sensor in the case that the positioning state of the GPS of the vehicle is not better than the preset condition;
   obtaining a measured value of the location point at the current time; and
   correcting the predicted value using the measured value of the location point at the current time to determine a second location point and using the second location point as the current location point of the vehicle.

4. The method for determining a location of a vehicle according to claim 3, **characterized in that** obtaining a measured value of the location point at the current time comprises:

   using information of a location point of laser point cloud data measured by a lidar at the current time in the point cloud map as the measured value of the location point at the current time;
   or using information of a location point measured by the GPS at the current time as the measured value of the location point at the current time.

5. The method for determining a location of a vehicle according to claim 1, **characterized in that** determining a current location point of the vehicle comprises:
   using a third location point manually set in the point cloud map as the current location point of the vehicle in the case that the positioning state of the GPS of the vehicle is not better than the preset condition.

**6.** The method for determining a location of a vehicle according to claim 1, **characterized in that** matching the first point cloud data with the second point cloud data to determine a transformation matrix between the first point cloud data and the second point cloud data comprises:

dividing the second point cloud data into ground second point cloud data and non-ground second point cloud data, and dividing the first point cloud data into ground first point cloud data and non-ground first point cloud data;
determining a first transformation matrix according to the ground second point cloud data and the ground first point cloud data; and
determining a second transformation matrix according to the first transformation matrix, the non-ground second point cloud data and the non-ground first point cloud data.

**7.** The method for determining a location of a vehicle according to claim 6, **characterized in that** determining a first transformation matrix according to the ground second point cloud data and the ground first point cloud data comprises:

performing down-sampling processing on the ground first point cloud data; and
matching the ground second point cloud data with the down-sampled ground first point cloud data to obtain a rotation-translation matrix for transforming the ground second point cloud data to the down-sampled ground first point cloud data, as the first transformation matrix.

**8.** The method for determining a location of a vehicle according to claim 6, **characterized in that** determining a second transformation matrix according to the first transformation matrix, the non-ground second point cloud data and the non-ground first point cloud data comprises:

transforming the non-ground second point cloud data according to the first transformation matrix to obtain transformed non-ground second point cloud data;
performing down-sampling processing on the non-ground first point cloud data; and
matching the transformed non-ground second point cloud data with the down-sampled non-ground first point cloud data to obtain a rotation-translation matrix for transforming the transformed non-ground second point cloud data to the down-sampled non-ground first point cloud data, as the second transformation matrix.

**9.** The method for determining a location of a vehicle according to claim 1, **characterized in that** determining coordinate information of the current location point according to coordinate information of the preset starting point and the transformation matrix comprises:

transforming the coordinate information of the preset starting point according to the first transformation matrix to obtain first coordinate information, and using a z-axis coordinate value in the first coordinate information as a z-axis coordinate value of the current location point; and
transforming the first coordinate information according to the second transformation matrix to obtain second coordinate information, and using an x-axis coordinate value and a y-axis coordinate value in the second coordinate information as an x-axis coordinate value and a y-axis coordinate value of the current location point.

**10.** The method for determining a location of a vehicle according to claim 1, **characterized by** further comprising:

transforming orientation information corresponding to the preset starting point according to the first transformation matrix to obtain first orientation information, and using a roll angle value and a pitch angle value in the first orientation information as a current roll angle value and a current pitch angle value of the vehicle;
transforming the first orientation information according to the second transformation matrix to obtain second orientation information and using a heading angle value in the second orientation information as a current heading angle value of the vehicle.

**11.** An apparatus for determining a location of a vehicle, **characterized by** comprising:

a current location determination module configured for determining a current location point of the vehicle according to a positioning state of a GPS of the vehicle;
a first point cloud data determination module configured for obtaining laser point cloud data measured by the vehicle at the current location point as first point cloud data;
a second point cloud data determination module configured for obtaining point cloud data corresponding to a preset starting point of the vehicle in a point cloud map as second point cloud data;

**EP 4 130 800 A1**

a transformation matrix determination module configured for matching the first point cloud data with the second point cloud data to determine a transformation matrix between the first point cloud data and the second point cloud data;

a coordinate determination module configured for determining coordinate information of the current location point according to coordinate information of the preset starting point and the transformation matrix.

12. An apparatus for determining a location of a vehicle, **characterized by** comprising:

a memory; and

a processor coupled to the memory, which is configured to perform the method for determining a location of a vehicle according to any one of claims 1 to 10 based on instructions stored in the memory.

13. A non-transitory computer-readable storage medium stored a computer program, which when executed by a processor implements the method for determining a location of a vehicle according to any one of claims 1 to 10.

determine a current location point of the
vehicle according to a positioning state of a
GPS of the vehicle — 101

obtain laser point cloud data measured by the
vehicle at the current location point as
first point cloud data — 102

obtain point cloud data corresponding to a
preset starting point of the vehicle in a
point cloud map as second point cloud data — 103

match the first point cloud data with the
second point cloud data to determine a
transformation matrix between the first point
cloud data and the second point cloud data — 104

determine coordinate information of the
current location point according to
coordinate information of the preset starting
point and the transformation matrix — 105

Fig.1

Fig.2

<u>300</u>

```
current location point
determination module        ⌐301

first point cloud data
determination module        ⌐302

second point cloud data
determination module        ⌐303

transformation matrix
determination module        ⌐304

coordinate
determination module        ⌐305
```

Fig.3

400

processor 402

input-output interface 404

bus 406

memory 401

network interface 403

storage interface 405

Fig.4

## INTERNATIONAL SEARCH REPORT

| | International application No. |
|---|---|
| | **PCT/CN2021/100288** |

### A. CLASSIFICATION OF SUBJECT MATTER

G01S 19/48(2010.01)i; G01S 17/06(2006.01)i; G01S 17/86(2020.01)i

According to International Patent Classification (IPC) or to both national classification and IPC

### B. FIELDS SEARCHED

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNKI, CNPAT, WPI, EPODOC: 京东乾石科技, 孔旗, 张金凤, 定位, 位置, 点云, 激光, 雷达, 参考, 配准, 匹配, 地图, 平移, 旋转, 变换, 转换, 矩阵, 地面, 非地面, vehicle, car, automobile, position+, location, point, cloud, ground, laser, radar, lidar, match+, matrix

### C. DOCUMENTS CONSIDERED TO BE RELEVANT

| Category* | Citation of document, with indication, where appropriate, of the relevant passages | Relevant to claim No. |
|---|---|---|
| PX | CN 112835085 A (BEIJING JINGDONG GANSHI TECHNOLOGY CO., LTD.) 25 May 2021 (2021-05-25) claims 1-13 | 1-13 |
| PX | CN 112835086 A (BEIJING JINGDONG GANSHI TECHNOLOGY CO., LTD.) 25 May 2021 (2021-05-25) description, paragraphs [0058]-[0116] | 1-13 |
| PX | CN 111812658 A (BEIJING JINGDONG GANSHI TECHNOLOGY CO., LTD.) 23 October 2020 (2020-10-23) description, paragraphs [0033]-[0085] | 1-13 |
| PX | US 2020393566 A1 (DEEPMAP INC.) 17 December 2020 (2020-12-17) description paragraphs [0031]-[0048], paragraphs [0089]-[0115], figure 11 | 1-7, 9-13 |
| X | CN 109887028 A (TIANJIN UNIVERSITY) 14 June 2019 (2019-06-14) description, paragraphs [0055]-[0085], figure 1 - figure 4 | 1-5, 11-13 |
| X | CN 110988894 A (CHANGJIA FENGXING (SUZHOU) INTELLIGENT TECHNOLOGY CO., LTD.) 10 April 2020 (2020-04-10) description, paragraphs [0068]-[0126] | 1-5, 11-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 August 2021** | **30 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/100288** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 111168669 A (SHANGHAI GAUSSIAN AUTOMATION TECHNOLOGY DEVELOPMENT CO., LTD.) 19 May 2020 (2020-05-19)<br>    entire document | 1-13 |
| A | CN 110609290 A (BEIJING IDRIVERPLUS TECHNOLOGY CO., LTD.) 24 December 2019 (2019-12-24)<br>    entire document | 1-13 |
| A | WO 2019070824 A1 (UBER TECHNOLOGIES, INC.) 11 April 2019 (2019-04-11)<br>    entire document | 1-13 |

Form PCT/ISA/210 (second sheet) (January 2015)

**INTERNATIONAL SEARCH REPORT**
Information on patent family members

International application No.

**PCT/CN2021/100288**

| Patent document cited in search report | | | Publication date (day/month/year) | Patent family member(s) | | | Publication date (day/month/year) |
|---|---|---|---|---|---|---|---|
| CN | 112835085 | A | 25 May 2021 | None | | | |
| CN | 112835086 | A | 25 May 2021 | None | | | |
| CN | 111812658 | A | 23 October 2020 | None | | | |
| US | 2020393566 | A1 | 17 December 2020 | None | | | |
| CN | 109887028 | A | 14 June 2019 | None | | | |
| CN | 110988894 | A | 10 April 2020 | None | | | |
| CN | 111168669 | A | 19 May 2020 | None | | | |
| CN | 110609290 | A | 24 December 2019 | None | | | |
| WO | 2019070824 | A1 | 11 April 2019 | US | 10684372 | B2 | 16 June 2020 |
| | | | | US | 2019101649 | A1 | 04 April 2019 |
| | | | | EP | 3692395 | A1 | 12 August 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010657188